# FASCICULE DE BREVET EUROPEEN

(11) **EP 2 737 185 B1**
(45) Date de publication et mention de la délivrance du brevet: **09.09.2015**
(21) Numéro de dépôt: 12743523.8
(22) Date de dépôt: 18.07.2012
(51) Int. Cl.: F01N 9/00, F01N 13/00, G01N 15/06

(54) **PROCEDE ET DISPOSITIF DE MESURE DE LA CONCENTRATION DE SUIES DANS UN GAZ D'ECHAPPEMENT, NOTAMMENT D'UN MOTEUR A COMBUSTION INTERNE**
VERFAHREN UND VORRICHTUNG ZUR MESSUNG DER KONZENTRATION VON RUSSPARTIKELN IN EINEM ABGAS, INSBESONDERE AUS EINEM VERBRENNUNGSMOTOR
METHOD AND DEVICE FOR MEASURING THE CONCENTRATION OF SOOT PARTICLES IN AN EXHAUST GAS, IN PARTICULAR FROM AN INTERNAL COMBUSTION ENGINE

(30) Priorité: 28.07.2011 FR 1156932
(43) Date de publication de la demande: 04.06.2014
(73) Titulaire: Electricfil Automotive, 01708 Miribel Cedex (FR)
(72) Inventeur: DUAULT, Frédéric, F-69150 Decines (FR); RAQUIN, Stéphane, F-69400 Villefranche-sur-Saone (FR)
(74) Mandataire: Thibault, Jean-Marc
(86) Numéro de dépôt international: PCT/FR2012/051699
(87) Numéro de publication internationale: WO 2013/014368

(56) Documents cités:
- EP-A2- 2 228 522
- DE-C1- 10 115 704
- US-A1- 2011 030 451

## Description

La présente invention concerne le domaine de la collecte et de la mesure de la concentration de particules dans des flux gazeux et en particulier, de la mesure de la concentration de particules dans les gaz d'échappement de moteurs à combustion interne.

Plus particulièrement, l'invention concerne un procédé de collecte de particules dans un flux gazeux. L'invention concerne également un capteur de suies spécialement conçu pour la mise en oeuvre de ce procédé.

L'invention s'applique tout particulièrement à la mesure de la concentration de particules carbonées, dites suies, dans des flux d'échappement de moteurs à combustion interne, afin, plus particulièrement, de qualifier l'état des filtres à particules au sein d'un circuit d'échappement de véhicules automobiles.

Le procédé de l'invention peut ainsi être mis en oeuvre aussi bien en position aval du filtre à particules pour diagnostiquer l'intégrité de celui-ci qu'en amont pour optimiser les cycles de régénération du filtre à particules et minimiser ainsi la consommation de carburant. L'invention vise aussi à permettre une amélioration de la robustesse du filtre à particules, ainsi qu'à dimensionner celui-ci de la façon la plus juste.

Dans -le domaine de l'invention, on connaît déjà comme par exemple par la demande de brevet EP 2 228 522, en particulier dans le domaine automobile, des capteurs destinés à mesurer, particulièrement en aval du filtre à particules dans le circuit d'échappement du véhicule, la concentration de suies au sein du flux d'échappement afin de diagnostiquer l'état du filtre à particules. Ces capteurs sont notamment des capteurs de type résistifs comprenant deux électrodes conductrices séparées l'une de l'autre et entre lesquelles est mesurée la variation de résistance électrique avec l'encrassement progressif du capteur, consécutif au dépôt des suies entre lesdites électrodes. La mesure de résistance s'effectue de façon automatique selon un cycle déterminé commandé par l'unité de commande électronique du véhicule ou du capteur, connectée aux bornes des électrodes du capteur. Cette unité de commande électronique effectue ensuite un calcul de concentration des suies à partir de la résistance mesurée pour qualifier l'état du filtre à particules et déclencher le cas échéant une alerte de remplacement de celui-ci.

La résistance mesurée aux bornes des électrodes du capteur varie de façon décroissante jusqu'à saturer avec l'augmentation progressive de la quantité de suies déposée sur le capteur. Cette variation décroissante résulte de l'établissement de ponts de liaison carbonés entre les électrodes du capteur du fait du dépôt des suies sur celui-ci lorsque le capteur est placé dans le flux d'échappement du véhicule lorsque le filtre à particules est défectueux.

Lorsque la courbe de résistance mesurée aux bornes du capteur atteint une asymptote horizontale, le capteur est dit saturé. Il est alors nécessaire de le régénérer pour la réalisation de nouveaux cycles de mesures. Cette opération est effectuée par l'intermédiaire d'une résistance chauffante destinée à brûler les suies déposées entre les électrodes par échauffement de la surface du capteur et des suies, permettant ainsi de régénérer le capteur pour de nouveaux cycles de mesures.

De tels capteurs de suies, qui peuvent également être de type capacitif et non résistif, bien que de fonctionnement en apparence très simple, sont soumis à un grand nombre de contraintes susceptibles de perturber leur intégrité et leur fonctionnement.

En particulier, les contraintes thermiques dans le flux d'échappement d'un moteur à combustion interne sont très importantes, la température du flux gazeux d'échappement pouvant atteindre 900 à 1000° C. Le capteur et ses composants doivent donc résister à de telles températures d'une part et permettre d'autre part la réalisation de mesures fidèles et reproductibles, ce qui est une gageure à de telles températures ambiantes dans un flux gazeux circulant à hautes vitesses, de l'ordre de plusieurs dizaines à une centaine de mètres par seconde.

De plus, les températures et vitesses du flux d'échappement influencent aussi grandement les propriétés de régénération du capteur lors de sa saturation, impliquant notamment une température très élevée, supérieure à 550°C, de chauffe de la résistance de régénération du capteur pour brûler les suies, ce qui s'avère, dans certains cas, particulièrement délicat.

Les capteurs de suies sont également soumis à des contraintes mécaniques très importantes du fait des chocs d'impact des suies ou de débris métalliques et/ou de céramiques provenant d'un filtre à particules défectueux sur la surface de mesure du capteur. En effet, ces objets, bien que de très faible taille et de très faible masse, entrent en contact avec le capteur avec une vitesse proche de celle du flux gazeux d'échappement et donc une énergie cinétique extrêmement importante. Les capteurs doivent donc également résister à ces contraintes mécaniques.

Enfin, la réponse d'un capteur de suies est également déterminée par l'homogénéité du dépôt des suies sur celui-ci et en conséquence, le positionnement du capteur pour récolter d'une façon la plus homogène possible et cibler les suies dans le flux d'échappement, c'est-à-dire sélectionner les suies d'une taille inférieure à 500 nm, est également déterminante.

Les différents capteurs de suies connus à ce jour s'avèrent pour la plupart insatisfaisants. En effet, soit ils sont trop fragiles aux contraintes thermiques et mécaniques liées à leur exploitation, soit ils sont peu fidèles en raison des difficultés liées à la régénération du capteur et à la difficulté de la mesure en raison du dépôt inhomogène des suies au niveau des électrodes.

Le but de la présente invention est de procurer une solution de collecte de suies et de mesure de la concentration de suies dans un flux d'échappement amélioré qui ne souffre pas, ou en tout cas atténue grandement, les problèmes des capteurs existants tels que précédemment décrits.

A cette fin, la présente invention a pour objet en premier lieu un procédé de collecte de suies dans un flux gazeux, notamment dans un flux d'échappement d'un moteur à combustion interne, par l'intermédiaire d'une sonde planaire, de préférence de type résistif ou capacitif, positionnée dans le flux gazeux et comportant au moins une face munie d'électrodes et une résistance électrique reliées à un dispositif électronique de mesure de la concentration des suies dans le flux gazeux. Selon le procédé de l'invention, on dévie le flux gazeux en amont de la sonde planaire par l'intermédiaire d'un bouclier de protection recouvrant intégralement la sonde planaire et comportant une fenêtre ouverte de collecte de suies ménagée dans une surface du bouclier de protection située en aval de la sonde planaire dans le flux gazeux, de manière à :
- protéger la sonde du flux gazeux frontal direct de suies et d'éventuels débris contenus dans le flux gazeux,
- générer un écoulement turbulent et réduire la vitesse du flux gazeux en aval de la sonde planaire pour sélectionner les particules selon leur taille,
ce dont il résulte une protection mécanique de la sonde planaire et un dépôt homogène des suies sur ladite sonde planaire.

De plus, l'invention a également pour objet dans un second objet, un capteur de suies pour mesurer la concentration de suies dans un flux gazeux, en particulier un flux gazeux d'échappement d'un moteur à combustion interne. Ce capteur comporte de façon connue au moins une sonde planaire de type résistif ou capacitif composé d'un substrat plan de matière isolante comportant :
- sur une première face au moins deux électrodes conductrices séparées l'une de l'autre d'une distance déterminée et reliée à une piste de connexion électrique, et
- au moins une résistance de régénération des électrodes et de mesure de température du flux gazeux, ladite résistance étant reliée à ses bornes à deux pistes de connexion électrique.

Selon l'invention, le capteur de suies proposé comporte un bouclier de protection recouvrant intégralement la sonde planaire sur toutes ses faces et comportant une fenêtre ouverte de collecte de suies ménagée dans une surface du bouclier de protection située en aval de la sonde planaire dans le flux gazeux, la fenêtre de collecte permettant un dépôt de suies sur au moins une zone de collecte sur la première face de la sonde lorsque le capteur est positionné dans un flux gazeux.

Diverses autres caractéristiques ressortent de la description faite ci-dessous en référence aux dessins annexés qui montrent, à titre d'exemples non limitatifs, des formes de réalisation de l'objet de l'invention.

Sur les **figures** annexées :
- la **figure 1** représente en vue de face, un capteur de suies selon l'invention équipé d'un bouclier de protection dans un mode préféré de réalisation,
- la **figure 2** représente le capteur de la **figure 1** en coupe longitudinale suivant son axe X- X' suivant un plan perpendiculaire au plan de la représentation de la **figure 1****;**
- la **figure 3** représente le capteur des **figures 1** et **2** vue de dos par rapport à la vue de la **figure 1****,**
- la **figure 4** représente une vue en coupe transversale suivant un plan C-C sur la **figure 2****,**
- les **figures 5A** et **5B** représentent les deux faces d'une sonde planaire pour la mesure de concentration de suies dans un flux gazeux tel que mis en oeuvre dans un capteur de suies conforme à l'invention,
- les **figures 6A** à **6D** représentent différentes variantes de réalisation du bouclier de protection pour un capteur de suies tel que représenté aux **figures 1** à **4****,**
- la **figure 7** représente schématiquement l'ouverture angulaire potentielle de la fenêtre de collecte pour un bouclier de protection cylindrique tel que représenté notamment aux **figures 6A** à **6D****;**
- la **figure 8** représente différentes simulations de mise en oeuvre du capteur de suies de l'invention dans un flux gazeux tel qu'un flux d'échappement de moteurs à combustion interne, montrant l'efficacité de perturbation du flux gazeux et de collecte de particules en fonction de la taille moyenne des particules;
- les **figures 9A** et **9B** représentent les variations de concentrations de suies mesurées à l'aide d'un capteur de suies conforme à l'invention respectivement en fonction de la taille des particules à vitesse de flux gazeux constant et en fonction de la vitesse de flux pour différentes tailles de particules considérées.
- la **figure 10A** est une vue de face, d'un autre exemple de réalisation d'un capteur de suies selon l'invention.
- la **figure 10B** est une vue en coupe transversale selon un plan B-B de la **figure 10A**.

La présente invention concerne un procédé de collecte de suies dans un flux gazeux ainsi qu'un capteur de suies pour la mise en oeuvre de ce procédé.

Le procédé et le capteur proposés par l'invention visent à permettre une mesure précise et reproductible de la concentration de suies, c'est-à-dire de particules carbonées, présentes dans un flux gazeux.

Une application particulière des procédé et capteur de suies de l'invention concerne la mesure de concentration de suies dans les circuits de gaz d'échappement de moteurs à combustion interne de véhicules, en aval ou amont de filtres à particules afin de vérifier l'efficacité et la performance de ces filtres et/ou diagnostiquer leur état et anticiper leur régénération ou leur changement et/ou mesurer la masse de suies stockées dans le filtre à particules et déclencher sa régénération. La suite de la présente description est faite en référence à une telle application en considérant un flux gazeux d'échappement et une conduite d'échappement d'un véhicule automobile équipé d'un filtre à particules et d'une gestion par unité de commande électronique de l'état de ce filtre à particules, entre autres fonctions.

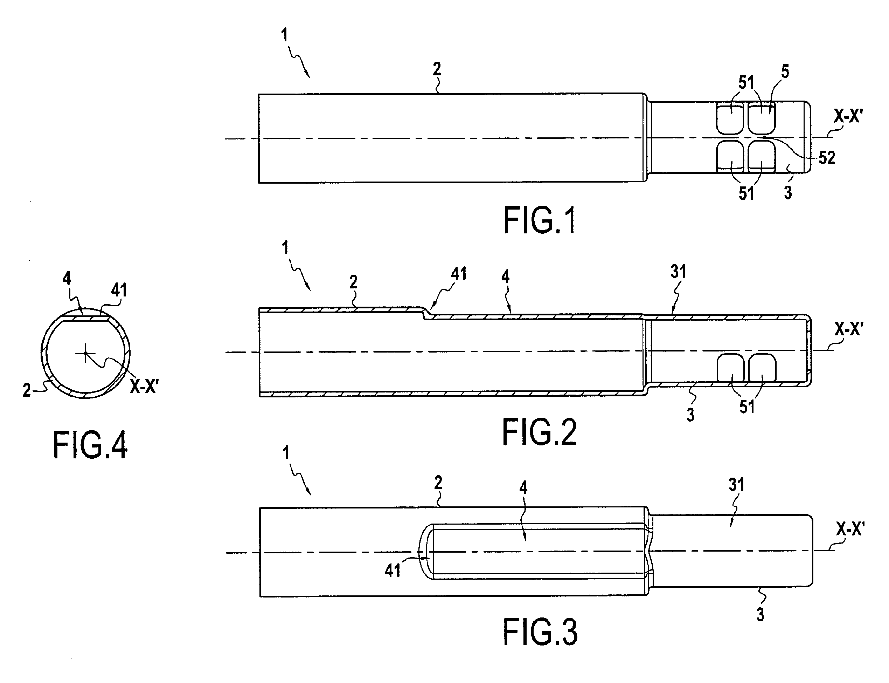

Les **figures 1** à **4** représentent un capteur selon l'invention dans une première forme préférée de réalisation.

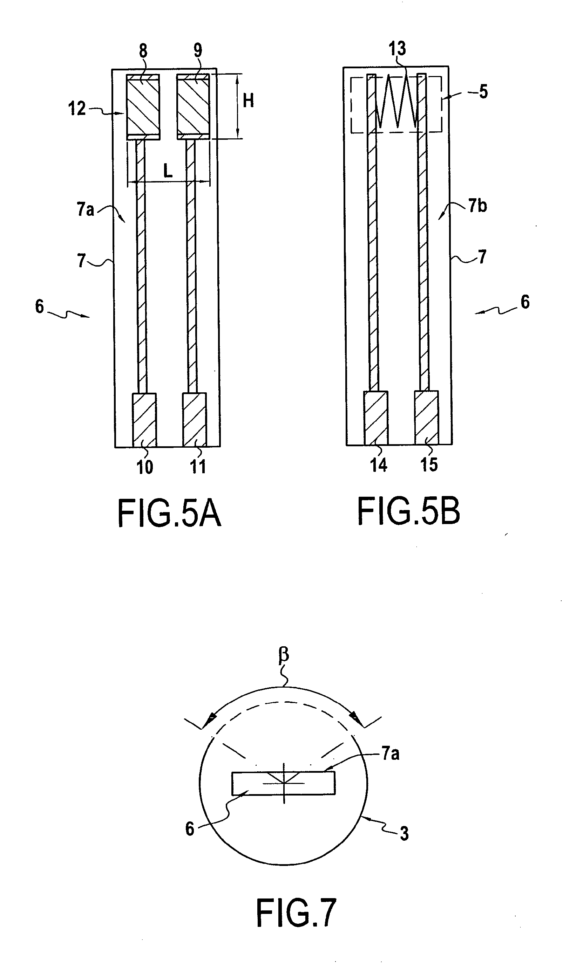

Le capteur de suies **1** de l'invention se compose d'un corps de support **2** et un bouclier de protection **3** recouvrant une sonde planaire résistive **6** telle que représentée particulièrement sur les **figures 5A** et **5B**, fixée à sa base sur le corps de support **2.** Le corps de support **2** constitue un fût de montage de la sonde planaire **6** et du bouclier de protection **3.** Il reçoit notamment des organes de connexion électrique de la sonde planaire **6** à l'unité de commande électronique du véhicule. Il sert également de corps de montage du capteur de suies **1** dans le circuit d'échappement du véhicule, en position amont ou aval du filtre à particules, par exemple à l'aide d'un système vis-écrou ou autre organe de montage usuellement mis en oeuvre pour le montage de capteurs dans des conduites de gaz.

Selon l'invention, le bouclier de protection **3** comporte une fenêtre **5** de collecte de suies. Cette fenêtre de collecte **5** est découpée dans la paroi du bouclier de protection **3** pour permettre la collecte et le dépôt de suies sur la sonde planaire **6** disposée à l'intérieur du bouclier de protection **3** lorsque le capteur de suies **1** est positionné dans un flux d'échappement gazeux.

De façon préférée, le corps de support **2** et le bouclier de protection **3** sont constitués d'un matériau métallique tel que d'Inconel 600 et présentent, comme représenté sur les figures annexées, une forme tubulaire cylindrique droite. Une telle forme cylindrique droite présente l'avantage d'être aisément réalisable, à moindre coût, tout en ménageant une lumière interne de logement de la sonde planaire **6** confortable et par sa convexité de surface externe de favoriser l'écoulement du flux gazeux d'échappement sans trop de pertes de charges. Cependant, une telle forme cylindrique n'est pas en soit essentielle à la réalisation du capteur de suies **1** et l'on peut aisément envisager toute forme tubulaire ou non permettant de protéger la sonde planaire et de générer une perturbation de l'écoulement du flux gazeux en aval de la sonde. Une forme tubulaire droite présentant un axe longitudinal et dont la section transversale présente une forme géométrique régulière fermée inscrite dans un cercle centré sur l'axe longitudinal d'extension du bouclier est toutefois préférable pour la réalisation du bouclier de protection **3**.

De façon préférée, la fenêtre de collecte **5** formée dans le bouclier de protection **3** est divisée en plusieurs ouvertures **51,** de formes et surfaces identiques par des croisillons de renforcement **52**. Ces croisillons de renforcement **52** ne remplissent aucun rôle quant aux performances de collecte des suies par le capteur de suies **1** par comparaison avec une fenêtre de collecte **5** qui en soit dépourvu. En revanche, ces croisillons **52** permettent de renforcer la structure périphérique de la fenêtre de collecte **5** et d'éviter tout écrasement ou enfoncement du bouclier de protection **3** au niveau de la fenêtre de collecte **5**. En effet, un tel écrasement peut malheureusement se produire en l'absence de tels croisillons de renforcement **52** lors de la manipulation du capteur de suies **1,** notamment lors de sa mise en place ou de son retrait dans une conduite d'échappement.

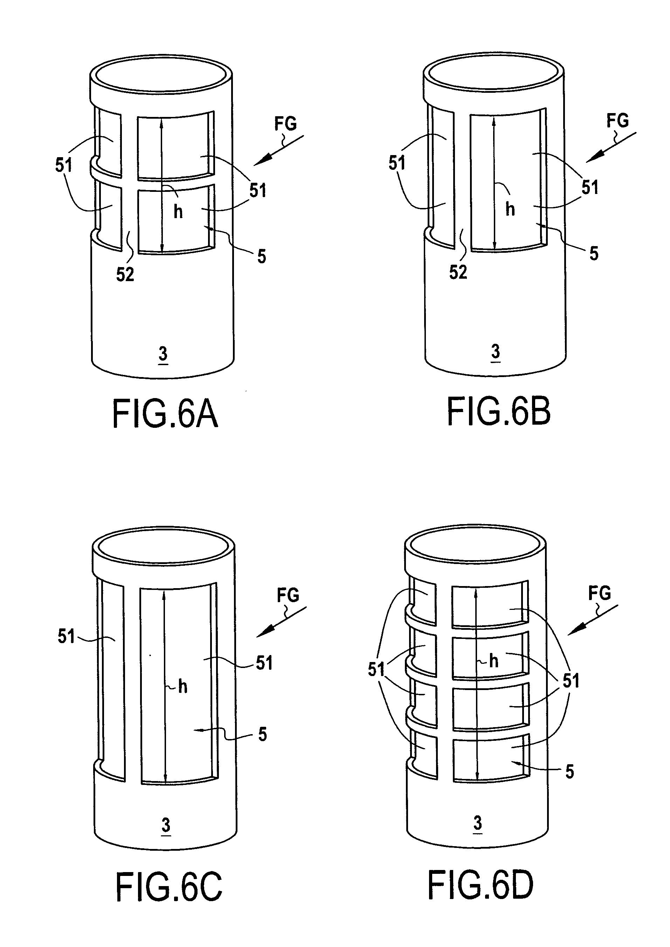

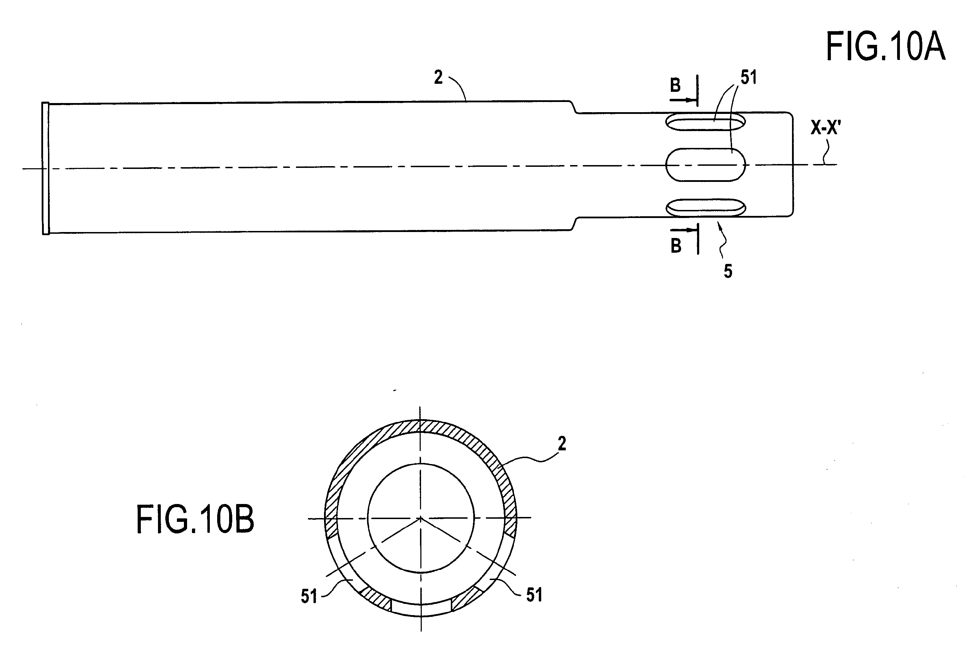

Comme cela ressort plus particulièrement des **figures 6A** à **6D** et **10A, 10B,** la géométrie exacte de la fenêtre de collecte **5** du bouclier de protection **3** peut être variable, notamment en ce qui concerne le nombre d'ouvertures **51** délimitées par les croisillons de renforcement **52.**

Comme dans l'exemple des **figures 1** à **4** et représenté à la **figure 6A****,** la fenêtre de collecte **5** peut être divisée en quatre ouvertures rectangulaires **51.** En variante, comme représenté aux **figures 6B** et **6C****,** la fenêtre de collecte **5** peut également être divisée simplement en deux ouvertures rectangulaires **51.** La fenêtre de collecte **5** du bouclier de protection **3** peut également, comme représenté à la **figure 6D****,** être divisée en un plus grand nombre encore d'ouvertures **51,** par exemple en huit ouvertures **51.** Dans une deuxième forme de réalisation préférée, la fenêtre de collecte **5** est divisée en trois ouvertures **51** de forme oblongue, parallèles entre elles et orientées parallèlement à l'axe longitudinal X-X' du capteur de suies.

La fenêtre de collecte **5** et ses ouvertures **51** peuvent être réalisées par découpe (laser, jet d'eau par exemple) dans la paroi cylindrique du bouclier de protection **3** ou encore par emboutissage, poinçonnage ou moulage du bouclier de protection **3.** Ainsi est-il possible de choisir précisément la forme de la fenêtre de collecte **5** et des ouvertures **51.**

Comme représenté à la **figure 7****,** la largeur **l** de la fenêtre de collecte **5** peut être telle que ladite fenêtre de collecte **5,** en considérant un bouclier de protection cylindrique de section transversale circulaire, couvre un secteur angulaire β compris de préférence entre 45° et 180° dans un plan horizontal perpendiculaire à l'axe longitudinal X-X' du capteur de suies, et ce quel que soit le rayon R de la section circulaire du bouclier de protection **3.**

Comme cela ressort plus particulièrement des **figures 2** à **4****,** le corps de support **2** présente avantageusement des moyens d'indexation en position du capteur de suies **1** afin d'assurer lors de la mise en place du capteur de suies dans une conduite de gaz d'échappement, le positionnement de la fenêtre de collecte **5** du bouclier de protection **3** orientée dans le sens de circulation du flux gazeux **FG** et donc du côté aval du flux. Ces moyens d'indexation en position sont par exemple constitués par un **méplat 4** formé sur la surface cylindrique du corps de support **2,** ce méplat **4** étant localisé dans la continuité d'une paroi continue de protection **31** du bouclier de protection **3,** et sur une face symétriquement opposée à la fenêtre de collecte **5** réalisée dans le bouclier de protection **3.** Ce méplat **4** peut s'étendre sur une partie ou sur toute la longueur du corps de support **2** du capteur mais de préférence sur sensiblement 50% de la longueur de celui-ci, afin de procurer à sa base une butée **41** à la surface cylindrique du corps de support **2,** cette butée **41** assurant également un positionnement en profondeur du capteur de suies **1** lors de son insertion dans une conduite d'échappement. Ainsi, grâce à un tel méplat **4,** le capteur peut être positionné de manière précise en profondeur et en angulation dans une conduite d'échappement dotée d'un orifice d'insertion de forme complémentaire de celle du corps de support **2.**

Le bouclier de protection **3** du capteur de suies **1** de la présente invention a pour fonction de protéger une sonde planaire **6** de tous types, capacitive ou résistive **6** comme représentée aux **figures 5A** et **5B****.** La sonde planaire est fixée sur le corps de support **2** par tout moyen approprié, de manière que la sonde planaire **6** s'étende à l'intérieur du bouclier de protection **3.**

Cette sonde planaire **6** comporte un substrat diélectrique plan **7** constitué de céramique, et de préférence d'alumine, sur une première face **7a (****figure 5A****),** deux électrodes **8, 9** en un matériau conducteur, de préférence or ou platine pouvant résister à la température élevée d'un gaz d'échappement de véhicule automobile, d'environ 900°C. Les deux électrodes **8, 9** sont reliées par des conducteurs électriques à deux pistes **10, 11** de connexion électrique permettant de reporter les contacts des électrodes **8, 9** à la base du substrat **7** pour connecter la sonde planaire **6** à l'unité de commande électronique du véhicule chargée d'effectuer une mesure de résistance électrique entre les électrodes **8, 9** pour contrôler la concentration de suies dans le flux d'échappement du véhicule.

Le substrat **7,** les électrodes **8, 9,** leurs connecteurs et leurs pistes **10, 11** sont recouverts d'un matériau diélectrique, par exemple de verre ou vitrocéramique, à l'exception d'une partie supérieure délimitant une zone **12** de collecte de suies s'inscrivant dans un rectangle de longueur **H** et de largeur **L.** Cette zone de collecte **12** constitue une partie active de la sonde planaire **6** sur laquelle la collecte des suies contenues dans le flux gazeux d'échappement est réalisée pour effectuer la mesure de résistance entre les électrodes **8, 9.**

La sonde planaire **6** comporte également sur une seconde face **7b** du substrat **7,** opposée à la première face **7a** et représentée sur la **figure 5B****,** une résistance électrique **13.** Cette résistance électrique **13** est reliée par des connecteurs électriques à deux pistes **14, 15** de connexion à l'unité de commande électronique du véhicule. Cette seconde face **7b** de la sonde est elle aussi recouverte d'un matériau diélectrique, par exemple de verre ou vitrocéramique, pour protéger la résistance électrique **13,** qui est avantageusement localisée symétriquement sur la face **7b** aux électrodes **8**, **9** et la zone de collecte **12** sur la face **7a.** En variante, la résistance électrique **13** peut aussi être intégrée à l'intérieur du substrat de la sonde planaire.

La résistance électrique **13** a, de façon connue, pour fonction première la régénération de la sonde planaire **6** du capteur **1** lorsque la zone de collecte **12** et l'espace entre les électrodes **8, 9** est encrassé de suies, établissant ainsi des ponts conducteurs entre les électrodes **8, 9.** Cette régénération est pilotée électroniquement par l'unité de commande électronique du véhicule ou du capteur à laquelle la sonde planaire **6** est connectée par ses pistes **10 ,11** et **14, 15** lorsque la résistance aux bornes des électrodes **8, 9** sature ou passe sous un seuil déterminé, signifiant l'encrassement de la zone de collecte **12.** L'unité de commande électronique commande alors l'échauffement de la résistance **13** pour brûler les suies déposées entre les électrodes **8, 9.**

La résistance **13** a également pour fonction seconde de permettre la mesure de température au sein du flux d'échappement dans lequel le capteur de suies **1** est positionné.

La zone de collecte **12** de suies peut avoir différentes formes et dimensions suivant par exemple la taille de la sonde planaire **6.** A titre d'exemple, cette largeur **L** peut être de façon préférée de l'ordre de 3 à 4 mm. La hauteur **h** de la fenêtre de collecte **5** du bouclier de protection **3** est alors fonction de la hauteur **H** de la zone de collecte **12** de la sonde planaire **6.** De façon préférée, dans le cadre de l'invention, le rapport de la hauteur **h** de la fenêtre de collecte **5** à la longueur **H** de la zone de collecte **12** de la sonde planaire **6** est alors compris de préférence entre 0,5 et 3, et de préférence encore entre 1 et 2. Il est à noter que le dimensionnement de la sonde planaire **6** et du bouclier de protection **3** est choisi de manière que la sonde planaire soit dépourvue de contact avec le bouclier de protection **3** pour permettre une circulation du flux gazeux pénétrant par la fenêtre de collecte **5,** à l'intérieur du bouclier de protection **3** et sur chaque face **7a, 7b** de la sonde planaire **6.**

Le capteur de suies **1** de l'invention peut être utilisé dans différentes configurations. Il peut notamment servir de façon préférée pour diagnostiquer l'état de fonctionnement du filtre à particules d'un véhicule automobile, notamment déterminer si celui-ci est fissuré ou intègre. Dans ce cas, le capteur de suies **1** est positionné dans la conduite d'échappement du véhicule en aval du filtre à particules.

Dans une autre application, le capteur de suies **1** peut également être positionné en amont du filtre à particules afin de qualifier son état de chargement en vue de l'optimisation des phases de régénération du filtre à particules et ainsi minimiser la consommation de carburant du véhicule.

Le capteur de suies **1** de l'invention permet, par la mise en oeuvre du bouclier de protection **3** de la sonde planaire, de limiter les conséquences négatives liées à la vitesse et la température élevées du flux gazeux d'échappement d'un moteur à combustion interne. En effet, le bouclier de protection **3** protège en premier lieu la sonde planaire **6** de mesure d'un impact direct du flux et des particules de suies contenues dans celui-ci sur la face **7a** et les électrodes **8, 9.** Il protège également la résistance **13** de régénération sur la face **7b** de la sonde planaire **6** d'un écoulement direct du flux gazeux qui implique une puissance supérieure de chauffe de la résistance lors des phases de régénération de la sonde planaire **6.**

Le bouclier de protection **3** dévie le flux gazeux d'échappement **FG** en amont de la sonde planaire **6** et produit un écoulement turbulent des lignes de flux en aval de la sonde, au niveau de la fenêtre de collecte **5** du bouclier de protection **3.** Cet écoulement turbulent produit un ralentissement de la vitesse du flux au niveau de la fenêtre de collecte **5,** qui elle-même produit une dépression tendant à favoriser la pénétration du flux perturbé dans le bouclier et ainsi favoriser le dépôt de suies, à vitesses réduite, sur la sonde planaire **6.**

Le lieu d'impact des suies sur la zone de collecte **12** de la sonde planaire **6** détermine la réponse du capteur de suies. Il est donc essentiel que ces suies impactent la face **7a** de la sonde planaire **6** au niveau de la zone de collecte **12** de cette sonde, quelle que soit la vitesse du flux d'échappement et toujours dans des proportions similaires, c'est-à-dire dans un rapport vitesse d'impact, vitesse d'écoulement constant, afin d'être insensible à la vitesse de flux. C'est pourquoi de façon préférée, la face **7a** et la zone de collecte **12** sont situées en regard de la fenêtre de collecte **5.** En d'autres termes, la face **7a** de la sonde planaire **6** est dirigée vers la fenêtre de collecte **5.**

De plus, les suies générées par un moteur à combustion peuvent s'agglomérer entre elles et former ainsi des agglomérats de plusieurs microns de diamètre. Ces agglomérats, s'ils impactent directement la sonde planaire **6** du capteur de suies **1,** peuvent saturer directement les électrodes **8, 9** de la sonde planaire, puis, du fait de leur taille, être décollées et emportées par le flux et donc perturber la mesure effective de la concentration en suies dans le flux d'échappement. Il est donc important d'éviter la collecte de ces agglomérats.

Du fait de la déviation produite par le bouclier, les agglomérats contenus dans le flux gazeux poursuivent après déviation, du fait de leur inertie, une trajectoire sensiblement rectiligne dans le flux d'échappement en aval du bouclier de protection **3** du capteur de suies **1** de l'invention, alors que les particules non agglomérées subissent, elles, la perturbation d'écoulement du flux gazeux en aval du capteur **1,** trajectoire et écoulement perturbés comprenant des turbulences favorisant un effet de retour des particules vers la fenêtre de collecte **5** du bouclier de protection **3** et la sonde planaire **6** disposée à l'intérieur.

Le bouclier de protection **3** du capteur de suies de l'invention procure aussi une protection mécanique importante de la sonde planaire **6** contre les débris métalliques et/ou de céramiques potentiels du filtre à particules en cas de défaillances de celui-ci.

Le bouclier de protection **3** protège enfin la sonde planaire **6** de projections de liquides éventuels susceptibles d'engendrer des chocs thermiques et des ruptures de la céramique constitutive de la sonde planaire **6.**

Par conséquent, le capteur de suies **1** de la présente invention permet non seulement une protection mécanique de la sonde planaire résistive **6** contre les chocs et la température du flux d'échappement, mais permet également avantageusement une sélection des particules de suies pour limiter au maximum la collecte de particules agglomérées et favoriser en contrepartie la collecte de particules fines, c'est-à-dire en pratique dont la plus grande dimension est inférieure ou égale à 5 µm. Par ailleurs, le capteur de suies selon l'invention permet de faciliter la régénération du capteur par le brulage des suies, même pour des flux gazeux à forte vitesse et faible température.

Le capteur de suies **1** de l'invention permet par ailleurs, par la perturbation du flux d'échappement généré, un dépôt à vitesse réduite des particules de suies et de manière homogène sur la sonde planaire **6** pour favoriser une réponse fidèle du capteur **1** dans le temps afin d'obtenir une insensibilité maximum aux conditions particulières dans le flux d'échappement.

Selon l'invention, le capteur de suies **1** précédemment décrit permet donc la définition et la mise en oeuvre d'un nouveau procédé de collecte de suies en vue de la mesure de la concentration de suies à l'aide d'une sonde planaire **6** de type résistif ou voire capacitif

Selon ce procédé, on dévie le flux gazeux en amont de la sonde planaire par l'intermédiaire d'un bouclier de protection recouvrant intégralement la sonde planaire sur toutes ses faces et comportant une unique fenêtre ouverte de collecte de suies ménagée dans une surface du bouclier de protection située en aval de la sonde planaire dans le flux gazeux, de manière à :
- protéger la sonde d'un impact frontal direct des suies et d'éventuels débris contenus dans le flux gazeux, et
- générer un écoulement turbulent et réduire la vitesse du flux gazeux en aval de la sonde planaire pour sélectionner les particules en fonction de leur taille,
ce dont il résulte une protection mécanique de la sonde planaire et un dépôt homogène des suies sur ladite sonde planaire.

Lors de la mise en oeuvre du procédé, on collecte les suies sur la zone de collecte **12** de la première face **7a** de la sonde planaire **6** en retrait de la fenêtre de collecte **5** ménagée dans le bouclier de protection **3.**

De plus, on veillera de préférence à ce que la zone de collecte **12** de suies sur la première face **7a** de la sonde planaire **6** soit située en regard de la fenêtre de collecte **5** ménagée dans le bouclier de protection **3.**

On veillera également enfin à ce que le capteur de suies **1** soit inséré dans le flux gazeux tel que l'axe longitudinal X-X' du bouclier de protection **3** s'étende perpendiculairement à la direction du flux gazeux et que la sonde planaire **6** s'étende également longitudinalement à l'intérieur du bouclier **3** suivant l'axe longitudinal X-X' de ce dernier.

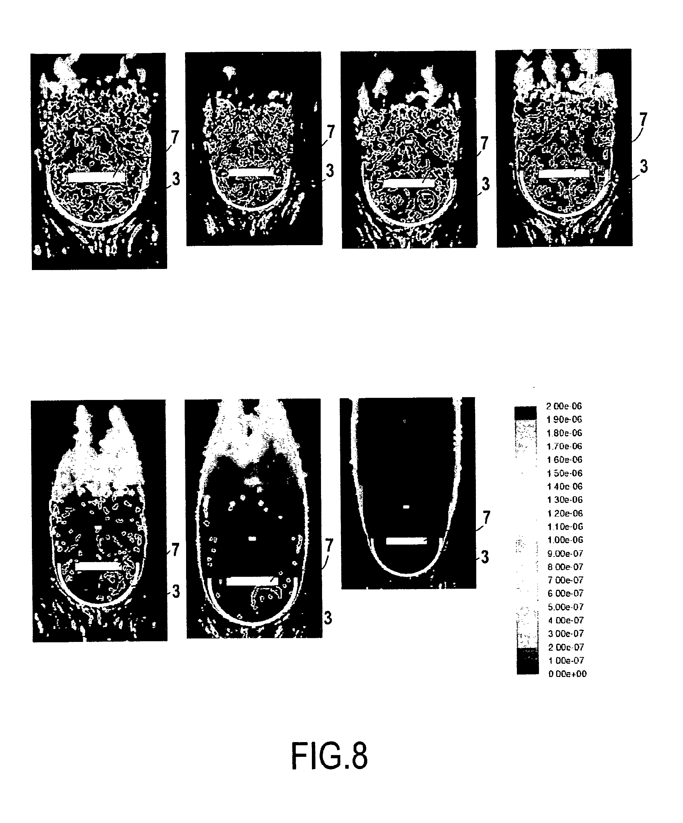

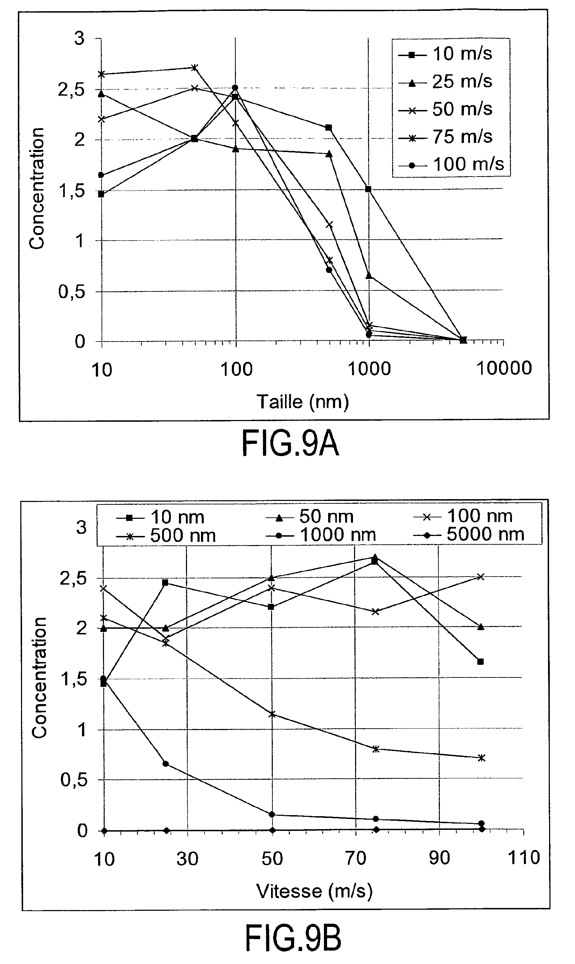

Les **figures 8** et **9** montrent plus particulièrement l'important effet de tri des particules procurées grâce au bouclier de protection **3** du capteur de suies **1** de l'invention.

Ainsi, comme on le remarque sur la **figure 8****,** retraçant différentes simulations de mise en oeuvre d'un capteur conforme à l'invention doté d'un bouclier de protection **3** de forme semi-cylindrique positionnée devant une sonde planaire **7** telle que précédemment décrite dans un flux gazeux **FG** d'échappement contenant différentes particules de suies dont la taille varie de 10 nm à 5 microns, on constate que pour des tailles de particules allant de 10 nanomètres à 500 nanomètres, la concentration de particules en aval de la sonde planaire **6** est très importante, avec une perturbation de flux maximum provoquant un retour des suies vers la sonde planaire **6.**

A l'inverse, pour des particules de taille plus importante, notamment de 750 nanomètres à 5 microns, la concentration en particules sur la sonde planaire **6** et les perturbations de flux en aval de la sonde planaire **6** sont beaucoup plus limitées, voire nulles pour des particules de 5 µm. Le capteur de suies **1** de l'invention favorise donc grandement la collecte de particules de taille réduite et en particulier de particules de quelques dizaines à quelques centaines de nanomètres, alors que les particules plus grosses que l'on peut considérer comme des agglomérats de particules ne sont, elles, pas collectées.

Ces observations sont par ailleurs confirmées par les **figures 9A** et **9B** qui retracent respectivement selon une vitesse de circulation donnée du flux d'échappement les concentrations de particules relevées à l'aide d'un capteur de suies **1** selon l'invention en fonction de la taille de ces particules et la concentration pour des particules de taille donnée en fonction de leur vitesse dans le flux d'échappement.

Ainsi, au vu de la **figure 9A****,** on peut constater que globalement, quelle que soit la vitesse de circulation de flux allant de 10 à 100 m/s, la concentration des particules collectées chute très brusquement lorsque les particules ont une taille supérieure à 100 nanomètres.

Cette constatation est également confirmée au regard de la **figure 9B****,** qui permet là aussi de constater que la concentration de particules de taille supérieure à 500 nanomètres décroît avec l'augmentation de la vitesse du flux d'échappement quand la concentration de particules de taille allant de 10 à 100 nanomètres varie avec l'augmentation de la vitesse mais sans chuter de manière significative en suivant une tendance régulière avec la vitesse de circulation.

## Revendications

1. Procédé de collecte de suies dans un flux gazeux, notamment dans un flux d'échappement d'un moteur à combustion interne, par l'intermédiaire d'une sonde planaire **(6),** de préférence de type résistif ou capacitif, positionnée dans le flux gazeux et comportant au moins une face **(7a)** munie d'électrodes **(8, 9)** reliées à un dispositif électronique de mesure de la concentration des suies dans le flux gazeux, et **caractérisé en ce que** l'on dévie le flux gazeux en amont de la sonde planaire **(6)** par l'intermédiaire d'un bouclier de protection **(3)** recouvrant intégralement la sonde planaire **(6)** et comportant une fenêtre **(5)** de collecte de suies ménagée dans une paroi du bouclier de protection **(3)** située en aval de la sonde planaire **(6)** dans le flux gazeux, de manière à :
- protéger la sonde planaire **(6)** d'un impact frontal direct des suies et débris éventuels contenus dans le flux gazeux, et
- générer un écoulement turbulent et réduire la vitesse du flux gazeux en aval de la sonde planaire pour sélectionner les suies en fonction de leur taille,
ce dont il résulte une protection mécanique de la sonde planaire et un dépôt homogène des suies sur ladite sonde planaire.

2. Procédé selon la revendication 1, **caractérisé en ce que** l'on réalise une sélection des suies collectées par l'intermédiaire du bouclier de protection **(3),** la plus grande dimension des suies collectées étant inférieure ou égale à 5 µm.

3. Procédé selon l'une des revendications 1 ou 2, **caractérisé en ce que** l'on collecte les suies sur une zone de collecte **(12)** de la première face **(7a)** de la sonde planaire **(6)** située en regard de la fenêtre de collecte **(5)** ménagée dans le bouclier de protection.

4. Procédé selon l'une des revendications 1 à 3, **caractérisé en ce que** le bouclier de protection **(3)** présente une forme tubulaire droite présentant un axe longitudinal (X-X') et dont la section transversale présente une forme géométrique régulière fermée inscrite dans un cercle centré sur l'axe longitudinal du bouclier de protection **(3).**

5. Procédé selon la revendication 4, **caractérisé en ce que** l'axe longitudinal (X-X') du bouclier s'étend perpendiculairement à la direction du flux gazeux et **en ce que** la sonde planaire **(6)** s'étend longitudinalement à l'intérieur du bouclier de protection suivant l'axe longitudinal (X-X') de ce dernier.

6. Capteur de suies **(1)** pour mesurer la concentration de suies dans un flux gazeux, en particulier un flux d'échappement d'un moteur à combustion interne, comportant une sonde planaire **(6)** de type résistif composé d'un substrat plan **(7)** de matière isolante comportant :
- sur une première face **(7a)** au moins deux électrodes **(8, 9)** conductrices séparées l'une de l'autre d'une distance déterminée et reliées chacune à une piste de connexion électrique **(10, 11),** et
- au moins une résistance **(13)** de régénération des électrodes **(8, 9)** et de mesure de température du flux gazeux, ladite résistance **(13)** étant reliée en ses bornes à deux pistes de connexion électrique **(14, 15),**
**caractérisé en ce qu'**il comporte un bouclier de protection **(3)** recouvrant la sonde planaire **(6)** sur toutes les faces **(7a, 7b)** de son substrat **(7)** et comportant une fenêtre **(5)** ouverte de collecte de suies ménagée dans une paroi du bouclier de protection **(3)** située en aval de la sonde planaire **(6)** dans le flux gazeux, la fenêtre de collecte **(5)** permettant un dépôt de suies sur au moins une zone de collecte **(12)** sur la première face **(7a)** de la sonde planaire **(6)** lorsque le capteur est positionné dans un flux gazeux.

7. Capteur de suies selon la revendication 6, **caractérisé en ce que** la zone de collecte **(12)** sur la première face de la sonde planaire et la fenêtre de collecte **(5)** ménagée dans le bouclier de protection **(3)** sont disposées en regard l'une de l'autre.

8. Capteur de suies selon la revendication 6 ou 7, **caractérisé en ce que** la zone de collecte **(12)** sur la première face de la sonde planaire **(6)** et la fenêtre de collecte **(5)** ménagée dans le bouclier de protection **(3)** sont de forme rectangulaire et le rapport de la longueur **h** de la zone de collecte **(12)** à la longueur **H** de la fenêtre de collecte **(5)** est compris entre 0, 2 et 3 et de préférence entre 1 et 2.

9. Capteur selon l'une des revendications 6 à 8 , **caractérisé en ce que** le bouclier de protection **(3)** présente une forme tubulaire droite présentant un axe longitudinal (X-X') et dont la section transversale présente une forme géométrique régulière fermée inscrite dans un cercle centré sur l'axe longitudinal d'extension du bouclier.

10. Capteur selon la revendication **9 , caractérisé en ce que** le bouclier de protection **(3)** présente une forme cylindrique de section transversale circulaire, la sonde planaire **(6)** étant positionnée dans la lumière du bouclier de sorte qu'elle s'étende suivant l'axe longitudinal (X-X') de celui-ci.

11. Capteur selon la revendication 10 , **caractérisé en ce que** la fenêtre de collecte **(5)** couvre un secteur angulaire compris entre 45° et 180° dans un plan horizontal perpendiculaire à l'axe longitudinal (X-X') du bouclier de protection **(3).**

12. Capteur selon l'une des revendications 6 à 11, **caractérisé en ce que** la fenêtre de collecte **(5)** est divisée en au moins deux ouvertures (51) par au moins un élément de renforcement **(52)** s'étendant entre deux côtés opposés de la fenêtre de collecte.

13. Capteur selon l'une des revendications 6 à 12 , **caractérisé en ce que** la sonde planaire **(6)** est dépourvue de contact avec le bouclier de protection **(3)** de manière à permettre une circulation du flux gazeux pénétrant par la fenêtre de collecte à l'intérieur du bouclier et sur chaque face de la sonde.

14. Capteur selon l'une des revendications 6 à 13 , **caractérisé en ce que** la résistance **(13)** de régénération est positionnée sur une seconde face **(7b)** de la sonde planaire de façon symétrique à la zone de collecte **(12)** de suies sur la première face **(7a)** de ladite sonde planaire par rapport au plan médian longitudinal de la sonde.

15. Capteur selon l'une des revendications 6 à 14 , **caractérisé en ce qu'**il comporte un corps de support **(2)** de la sonde planaire **(6)** et du bouclier de protection **(3),** le corps de support **(2)** comportant un moyen d'indexation en position du capteur dans un flux gazeux tel que la fenêtre de collecte **(5)** soit située du côté aval dans le sens de circulation du flux.

16. Capteur selon la revendication 15 , **caractérisé en ce que** le moyen d'indexation en position comprend un méplat **(4)** sur une surface cylindrique du corps de support **(2).**

## Patentansprüche

1. Verfahren zum Sammeln von Ruß in einem Gasstrom, insbesondere in einem Auspuffstrom eines Verbrennungsmotors, mit Hilfe einer Planarsonde (6), vorzugsweise resistiven oder kapazitiven Typs, die in dem Gaststrom angeordnet ist und mindestens eine Seite (7a) umfasst, die mit Elektroden (8, 9) versehen ist, die mit einer elektronischen Einrichtung zum Messen der Rußkonzentration in dem Gasstrom verbunden sind, und **dadurch gekennzeichnet, dass** der Gasstrom stromaufwärts zu der Planarsonde (6) mit Hilfe eines Schutzschildes (3) abgelenkt wird, der die Planarsonde (6) zur Gänze bedeckt und ein Fenster (5) zum Sammeln von Ruß umfasst, das in einer Wand des Schutzschildes (3) ausgenommen ist, die sich stromabwärts zu der Planarsonde (6) in dem Gasstrom befindet, um:
- die Planarsonde (6) vor einem direkten Frontalaufprall von Ruß und möglichen im Gasstrom enthaltenen Trümmern zu schützen,
- ein wirbelndes Abfließen zu erzeugen und die Geschwindigkeit des Gasstroms stromabwärts zu der Planarsonde zu verringern, um die Rußpartikel in Abhängigkeit von ihrer Größe auszuwählen,
wodurch sich ein mechanischer Schutz der Planarsonde und eine homogene Ablage des Rußes auf der Planarsonde ergeben.

2. Verfahren nach Anspruch 1, **dadurch gekennzeichnet, dass** eine Auswahl der gesammelten Rußpartikel mit Hilfe des Schutzschildes (3) erfolgt, wobei die größte Dimension der gesammelten Rußpartikel kleiner oder gleich 5 µm ist.

3. Verfahren nach einem der Ansprüche 1 oder 2, **dadurch gekennzeichnet, dass** die Rußpartikel auf einer Sammelzone (12) der ersten Seite (7a) der Planarsonde (6) gesammelt werden, die sich gegenüber dem Sammelfenster (5), das in dem Schutzschild ausgenommen ist, befindet.

4. Verfahren nach einem der Ansprüche 1 bis 3, **dadurch gekennzeichnet, dass** der Schutzschild (3) eine gerade Röhrenform aufweist, die eine Längsachse (X-X') umfasst, und deren Querschnitt eine geschlossene regelmäßige geometrische Form aufweist, die in einem Kreis eingeschrieben ist, der auf der Längsachse des Schutzschildes (3) zentriert ist.

5. Verfahren nach Anspruch 4, **dadurch gekennzeichnet, dass** sich die Längsachse (X-X') des Schildes senkrecht auf die Richtung des Gasstroms erstreckt, und dass sich die Planarsonde (6) längs im Inneren des Schutzschildes entlang der Längsachse (X-X') dieses letztgenannten erstreckt.

6. Rußsensor (1) zum Messen der Rußkonzentration in einem Gasstrom, insbesondere einem Auspuffstrom eines Verbrennungsmotors, umfassend eine Planarsonde (6) resistiven Typs, die aus einem flachen Substrat (7) aus Isoliermaterial zusammengesetzt ist, umfassend:
- auf eine ersten Seite (7a) mindestens zwei leitende Elektroden (8, 9), die voneinander um einen bestimmten Abstand entfernt und jeweils mit einer elektrischen Anschlussspur (10,11) verbunden sind, und
- mindestens einen Widerstand (13) zur Regeneration der Elektroden (8, 9) und zum Messen einer Temperatur des Gasstroms, wobei der Widerstand (13) an seinen Klemmen mit zwei elektrischen Anschlussspuren (14, 15) verbunden ist,
**dadurch gekennzeichnet, dass** er einen Schutzschild (3) umfasst, der die Planarsonde (6) auf allen Seiten (7a, 7b) ihres Substrats (7) bedeckt, und umfassend ein offenes Fenster (5) zum Sammeln von Ruß, das in einer Wand des Schutzschildes (3) ausgenommen ist, die sich stromabwärts zu der Planarsonde (6) in dem Gasstrom befindet, wobei das Sammelfenster (5) eine Ablage von Ruß auf mindestens einer Sammelzone (12) auf der ersten Seite (7a) der Planarsonde (6) ermöglicht, wenn der Sensor in einem Gasstrom angeordnet ist.

7. Rußsensor nach Anspruch 6, **dadurch gekennzeichnet, dass** die Sammelzone (12) auf der ersten Seite der Planarsonde und das Sammelfenster (5), das in dem Schutzschild (3) ausgenommen ist, einander gegenüberliegend angeordnet sind.

8. Rußsensor nach Anspruch 6 oder 7, **dadurch gekennzeichnet, dass** die Sammelzone (12) auf der ersten Seite der Planarsonde (6) und das Sammelfenster (5), das in dem Schutzschild (3) ausgenommen ist, rechteckige Form haben, und dass das Verhältnis der Länge h der Sammelzone (12) zur Länge H des Sammelfensters (5) zwischen 0,2 und 3 und vorzugsweise zwischen 1 und 2 beträgt.

9. Sensor nach einem der Ansprüche 6 bis 8, **dadurch gekennzeichnet, dass** der Schutzschild (3) eine gerade Röhrenform aufweist, die eine Längsachse (X-X') umfasst und deren Querschnitt eine geschlossene regelmäßige geometrische Form aufweist, die in einen Kreis eingeschrieben ist, der auf die Längsausdehnungsachse des Schildes zentriert ist.

10. Sensor nach Anspruch 9, **dadurch gekennzeichnet, dass** der Schutzschild (3) eine zylindrische Form mit kreisförmigem Querschnitt aufweist, wobei die Planarsonde (6) in der Öffnung des Schildes positioniert ist, so dass sie sich entlang der Längsachse (X-X') desselben erstreckt.

11. Sensor nach Anspruch 10, **dadurch gekennzeichnet, dass** das Sammelfenster (5) einen Winkelsektor zwischen 45° und 180° in einer Horizontalebene senkrecht auf die Längsachse (X-X') des Schutzschildes (3) abdeckt.

12. Sensor nach einem der Ansprüche 6 bis 11, **dadurch gekennzeichnet, dass** das Sammelfenster (5) in mindestens zwei Öffnungen (51) durch mindestens ein Verstärkungselement (52) geteilt ist, das sich zwischen zwei gegenüberliegenden Seiten des Sammelfensters erstreckt.

13. Sensor nach einem der Ansprüche 6 bis 12, **dadurch gekennzeichnet, dass** die Planarsonde (6) keinen Kontakt mit dem Schutzschild (3) aufweist, um eine Zirkulation des Gasstroms, der durch das Sammelfenster eindringt, im Inneren des Schildes und auf jeder Seite der Sonde zu ermöglichen.

14. Sensor nach einem der Ansprüche 6 bis 13, **dadurch gekennzeichnet, dass** der Regenerationswiderstand (13) auf einer zweiten Seite (7b) der Planarsonde symmetrisch zur Rußsammelzone (12) auf der ersten Seite (7a) der Planarsonde in Bezug zur Längsmittelebene der Sonde angeordnet ist.

15. Sensor nach einem der Ansprüche 6 bis 14, **dadurch gekennzeichnet, dass** er einen Tragkörper (2) der Planarsonde (6) und es Schutzschildes (3) umfasst, wobei der Tragkörper (2) ein Mittel zur Indexierung des Sensors in Position in einem Gasstrom umfasst, so dass das Sammelfenster (5) auf der stromabwärtigen Seite in Zirkulationsrichtung des Stroms angeordnet ist.

16. Sensor nach Anspruch 15, **dadurch gekennzeichnet, dass** das Mittel zur Positionsindexierung eine Abflachung (4) auf einer zylindrischen Seite des Tragkörpers (2) umfasst.

## Claims

1. A method of collecting soot in a gas stream, in particular an exhaust stream from an internal combustion engine, by means of a planar probe (6), preferably of resistive or capacitive type, positioned in the gas stream and having at least one face (7a) provided with electrodes (8, 9) connected to an electronic device for measuring soot concentration in the gas stream, the method being **characterized in that** the gas stream upstream from the planar probe (6) is deflected by means of a protection shield (3) completely covering the planar probe (6) and having a single soot-collection window (5) formed in a wall of the protection shield (3) that is situated downstream from the planar probe (6) in the gas stream, in such a manner as to:
· protect the planar probe (6) from a direct frontal impact of soot and any debris contained in the gas stream; and
· generate a turbulent flow and reduce the speed of the gas stream downstream from the planar probe so as to select soot particles as a function of their size;
thus resulting in mechanical protection of the planar probe and a uniform deposit of soot on said planar probe.

2. A method according to claim 1, **characterized in that** the soot that is collected is selected by means of the protection shield (3) so that the largest dimension of the collected soot particles is less than or equal to 5 µm.

3. A method according to claim 1 or claim 2, **characterized in that** soot is collected in a collection zone (12) on the first face (7a) of the planar probe (6) facing the collection window (5) formed in the protection shield.

4. A method according to any one of claims 1 to 3, **characterized in that** the protection shield (3) is of straight tubular shape having a longitudinal axis (X-X'), and of cross-section that presents a closed regular geometrical shape inscribed within a circle centered on the longitudinal axis of the protection shield (3).

5. A method according to claim 4, **characterized in that** the longitudinal axis (X-X') of the shield extends perpendicularly to the flow direction of the gas stream, and **in that** the planar probe (6) extends longitudinally inside the protection shield along its longitudinal axis (X-X').

6. A soot sensor (1) for measuring soot concentration in a gas stream, in particular an exhaust stream from an internal combustion engine, the sensor comprising a resistive type planar probe (6) made up of a plane substrate (7) of insulating material and having:
· on a first face (7a) at least two conductive electrodes (8, 9) separated from each other by a determined distance and each connected to an electrical connection track (10, 11); and
· at least one resistor (13) for regenerating the electrodes (8, 9) and for measuring the temperature of the gas stream, said resistor (13) being connected at its terminals to two electrical connection tracks (14, 15);
the sensor being **characterized in that** it includes a protection shield (3) covering the planar probe (6) over all of the faces (7a, 7b) of its substrate (7) and including an open window (5) for collecting soot arranged in a wall of the protection shield (3) situated downstream from the planar probe (6) in the gas stream, the collection window (5) enabling soot to be deposited on at least one collection zone (12) on the first face (7a) of the planar probe (6) when the sensor is positioned in a gas stream.

7. A soot sensor according to claim 6, **characterized in that** the collection zone (12) on the first face of the planar probe and the collection window (5) arranged in the protection shield (3) are arranged facing each other.

8. A soot sensor according to claim 6 or claim 7, **characterized in that** the collection zone (12) on the first face of the planar probe (6) and the collection window (5) arranged in the protection shield (3) are of rectangular shape, and the ratio of the length h of the collection zone (12) to the height H of the collection window (5) lies in the range 0.2 to 3, and preferably in the range 1 to 2.

9. A sensor according to any one of claims 6 to 8, **characterized in that** the protection shield (3) is of straight tubular shape presenting a longitudinal axis (X-X') and of cross-section presenting a closed regular geometrical shape inscribed in a circle centered on the longitudinal axis along which the shield extends.

10. A sensor according to claim 9, **characterized in that** the protection shield (3) presents a cylindrical shape of circular cross-section, the planar probe (6) being arranged in the inside space of the shield so as to extend along its longitudinal axis (X-X').

11. A sensor according to claim 10, **characterized in that** the collection window (5) covers an angular sector lying in the range 45° to 180° in a horizontal plane perpendicular to the longitudinal axis (X-X') of the protection shield (3).

12. A sensor according to any one of claims 6 to 11, **characterized in that** the collection window (5) is subdivided into at least two openings (51) by at least one reinforcing element (52) extending between two opposite sides of the collection window.

13. A sensor according to any one of claims 6 to 12, **characterized in that** the planar probe (6) does not make contact with the protection shield (3) so as to enable the gas stream that penetrates via the collection window to flow inside the shield and over each of the faces of the probe.

14. A sensor according to any one of claims 6 to 13, **characterized in that** the regeneration resistor (13) is positioned on a second face (7b) of the planar probe in a manner that is symmetrical to the soot collection zone (12) on the first face (7a) of said planar probe relative to the longitudinal midplane of the probe.

15. A sensor according to any one of claims 6 to 14, **characterized in that** it includes a support body (2) for the planar probe (6) and the protection shield (3), the support body (2) including indexing means for indexing the position of the sensor in a gas stream such that the collection window (5) is situated on the downstream side in the stream flow direction.

16. A sensor according to claim 15, **characterized in that** the position indexing means comprise a flat (4) on a cylindrical surface of the support body (2).
